# EUROPÄISCHE PATENTSCHRIFT

(11) **EP 4 245 121 B1**
(45) Veröffentlichungstag und Bekanntmachung des Hinweises auf die Patenterteilung: **04.03.2026**
(21) Anmeldenummer: 23160459.6
(22) Anmeldetag: 07.03.2023
(51) Int. Cl.: A01F 15/08, A01F 15/07

(54) **ABLADEKIPPVORRICHTUNG FÜR RUNDBALLEN**
DUMPING TIPPING DEVICE FOR ROUND BALES
DISPOSITIF POUR BASCULER LE DÉCHARGEMENT DE BALLES RONDES

(30) Priorität: 14.03.2022 DE 102022105898
(43) Veröffentlichungstag der Anmeldung: 20.09.2023
(73) Patentinhaber: Deere & Company, Moline, IL 61265 (US)
(72) Erfinder: CHAPON, Emmanuel, 68163 Mannheim (DE); BLANCHON, Guillaume, 68163 Mannheim (DE)
(74) Vertreter: Stein, Stefan

(56) Entgegenhaltungen:
- EP-A1- 3 338 534
- DE-U1- 202006 015 516
- GB-A- 2 305 648

## Beschreibung

Die Erfindung betrifft eine Ballenpresse oder ein Ballenwickler mit einer Abladekippvorrichtung für Rundballen nach dem Oberbegriff des Anspruchs 1.

### Technologischer Hintergrund

In der Landwirtschaft wird Erntegut, insbesondere Gras und Stroh, mittels Ballenpressen zu Ballen gepresst, ggf. umwickelt und auf einem Feld abgelegt. Die Ballen werden in einem nachfolgenden Arbeitsvorgang auf einen Anhänger geladen und abtransportiert. Falls eine Rundballenpresse verwendet wird, ist die Symmetrieachse des Ballens üblicherweise horizontal und quer zur Fahrtrichtung der Ballenpresse orientiert, und der Ballen rollt nach hinten aus der Rundballenpresse bzw. einem Ballenwickler heraus und bleibt letztlich auf seinem Umfang ruhend mit parallel zum Boden ausgerichteter Symmetrieachse auf dem Feld stehen. Bei bestimmten topografischen Bedingungen kann es sich als sinnvoll erweisen, den Ballen beim Auswerfen umzukippen, damit er auf seiner flachen Stirnfläche zum Liegen kommt und an Längs- oder Querhängen nicht wegrollen oder umfallen kann.

Es sind hierfür so genannte Abladekippvorrichtungen für Rundballen beschrieben worden, die Rampen für den auszuwerfenden Ballen umfassen, welche nach hinten und unten neigbar und zusätzlich zur Seite schwenkbar sind, um den Ballen auf seine Seite zu kippen (GB 2 305 648 A, EP 0 910 941 A1, EP 2 149 293 A1), jedoch zumindest einen zusätzlichen Aktor für die Schwenkbewegung benötigen und somit relativ aufwändig sind.

Weniger aufwändig sind demgegenüber Abladekippvorrichtungen, die ein hinter der Ballenpresse bzw. dem Ballenwickler gezogenes Fahrgestell mit einem auf dem Boden rollenden Rad und einer Fläche umfassen, welche den darauf rollenden Ballen zur Seite hin umkippt (US 4 162 135 A, DE 41 38 499 A1, JP 3101618 B1). Die Abladekippvorrichtungen sind um die Querachse frei schwenkbar mit der Ballenpresse bzw. dem Ballenwickler gekoppelt, damit sie den Bodenkonturen folgen können und gemäß DE 41 38 499 A1 kann eine Aushebevorrichtung vorgesehen sein, um die Abladekippvorrichtung beim Wenden auf dem Feld oder bei Straßenfahrten vor Beschädigung zu schützen. Auch hier ist demnach ein zugeordneter Aktor vorgesehen, um beispielsweise zu verhindern, dass die Abladekippvorrichtung beim Rückwärtsfahren in einer Furche steckenbleibt und beschädigt wird oder sogar die Ballenpresse oder den Ballenwickler beschädigt. DE 20 2006 015 516 U1 und EP 3 338 534 A1 und GB 2 305 648 A offenbaren Ballenwickler mit Abladekippvorrichtung für Rundballen.

### Aufgabe

Ausgehend vom Stand der Technik liegt der vorliegenden Erfindung die Aufgabe zu Grunde, die Gefahr einer Beschädigung einer gezogenen Abladekippvorrichtung auf weniger aufwändige Weise als bisher zu verringern.

### Erfindung

Die vorliegende Erfindung wird durch die Patentansprüche definiert.

Eine Ballenpresse oder ein Ballenwickler mit einer Eine Abladekippvorrichtung für Rundballen ist um eine horizontale, sich quer zu einer Vorwärtsrichtung erstreckende Achse schwenkbar an einer Presse oder einem Wickler für Rundballen anbringbar oder angebracht und von der Presse oder dem Wickler über ein Feld ziehbar. Die Abladekippvorrichtung ist durch ein Stützelement auf dem Boden abstützbar und umfasst Umlenkmittel, die konfiguriert sind, einen Rundballen, der von einer mittels eines Aktors schwenkbaren Einrichtung der Presse oder des Wicklers hinabrollt, auf welcher der Ballen beim Pressen oder Wickeln aufliegt, zur Seite hin umzulenken, sodass er mit seiner flachen Stirnseite auf dem Boden zu liegen kommt. Die Abladekippvorrichtung ist derart mit der schwenkbaren Einrichtung gekoppelt, dass das Stützelement während der Erstellung oder des Umwickelns des Ballens außer Bodeneingriff ist und durch die durch den Aktor bewerkstelligte Schwenkbewegung der Einrichtung in Bodeneingriff gerät. Die um die horizontale, sich quer zur Vorwärtsrichtung erstreckende Achse wirkt schwenkbar an der schwenkbaren Einrichtung angelenkte Abladekippvorrichtung mit einem Anschlag zusammen, der mit der schwenkbaren Einrichtung gekoppelt ist und die Abladekippvorrichtung bei während des Pressens oder Wickelns horizontal orientierter, schwenkbarer Einrichtung anhebt und bei zum Ablegen des Rundballens gekippter Einrichtung außer Kontakt mit der Abladekippvorrichtung gelangt, welche dann durch die Schwerkraft um die Achse verschwenkt, sodass das Stützelement in Bodeneingriff gelangt.

Mit anderen Worten umfasst die Presse oder der Ballenwickler eine Einrichtung, die durch einen Aktor zwischen einer horizontalen Position und einer nach hinten geneigten Position schwenkbar ist. In der horizontalen Position liegt der Ballen während des Pressens oder Wickelns auf der Einrichtung auf und durch den Aktor wird die Einrichtung nach hinten gekippt, um den Ballen nach hinten abrollen zu lassen und auf dem Feld abzulegen. Es wird vorgeschlagen, die um die Querachse schwenkbar mit der Presse oder dem Wickler gekoppelte Abladekippvorrichtung mit dem Aktor der Einrichtung zu koppeln. Somit ist das Stützelement der Abladekippvorrichtung bei horizontaler Einrichtung vom Boden abgehoben und kann die Abladekippvorrichtung kann bei eventuellen Rückwärtsfahrten zum Wenden auf einem Feld oder bei einer Transportfahrt bzw. beim Umsetzen der Presse oder des Wicklers auf einem Feld, bei welcher oder welchem die Einrichtung auch horizontal orientiert ist, nicht beschädigt werden. Zum Ablegen des Ballens wird die Abladekippeinrichtung gemeinsam mit der Einrichtung durch deren Aktor nach hinten und unten gekippt und das Stützelement gelangt in Bodeneingriff, um den Ballen auf die Seite zu legen. Ein separater Aktor für die Abladekippeinrichtung ist somit nicht erforderlich.

Der Anschlag kann starr mit der schwenkbaren Einrichtung verbunden sein.

Bei einer anderen Ausführungsform ist der Anschlag an einer Schwinge vorgesehen, die am Rahmen der Presse oder des Wicklers um eine horizontale, quer zur Vorwärtsrichtung orientierte Achse frei schwenkbar angelenkt und durch eine Feder nach oben vorgespannt ist, wobei die Schwinge durch die (gekippte) Einrichtung um die Achse (nach unten) verschwenkbar ist.

Das Stützelement kann ein Rad oder eine Kufe umfassen.

### Ausführungsbeispiel

In den Zeichnungen sind zwei nachfolgend näher beschriebene Ausführungsbeispiele der Erfindung dargestellt, wobei die Bezugszeichen nicht zu einer einschränkenden Auslegung der Patentansprüche herangezogen werden dürfen. Es zeigt:
- Fig. 1: eine schematische seitliche Ansicht einer Kombination aus einer Ballenpresse und einem Ballenwickler mit einer Abladekippvorrichtung,
- Fig. 2: eine perspektivische Ansicht des rückwärtigen Bereichs des Ballenwicklers mit einem horizontal orientierten Wickeltisch und angehobener Abladekippvorrichtung gemäß einer ersten Ausführungsform,
- Fig. 3: die Ansicht nach Figur 2 bei nach hinten gekipptem Wickeltisch,
- Fig. 4: eine perspektivische Ansicht des rückwärtigen Bereichs des Ballenwicklers mit einem horizontal orientierten Wickeltisch und angehobener Abladekippvorrichtung gemäß einer zweiten Ausführungsform,
- Fig. 5: die Ansicht nach Figur 4 bei nach hinten gekipptem Wickeltisch.

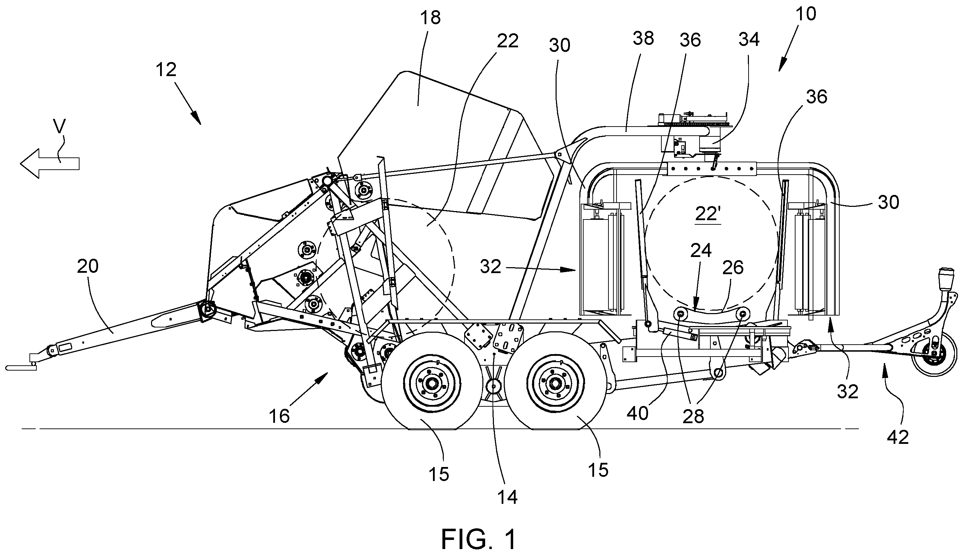

Die Figur 1 zeigt eine Seitenansicht einer Kombination 12 aus einer Ballenpresse 16 und einem Ballenwickler 10. Die Ballenpresse 16 dient zum Pressen von organischem Material, das von einem Feld aufgenommen wird, zu einem Rundballen und der Ballenwickler zum Umwickeln des Rundballens mit Folie oder einem anderen Wickelmaterial. Die Kombination 12 baut sich auf einem Rahmen 14 auf, der sich auf Rädern 15 auf dem Erdboden abstützt. Die Ballenpresse 16 umfasst eine rückwärtige Tür 18. Die Kombination 12 wird im Betrieb durch eine Deichsel 20 hinter einem nicht gezeigten Zugfahrzeug (Ackerschlepper) in einer Vorwärtsrichtung V über ein Feld gezogen. Die Kombination 12 wird in der EP 1 186 225 A1 im Einzelnen beschrieben, deren Offenbarung durch Verweis mit in die vorliegenden Unterlagen aufgenommen wird. Es sei angemerkt, dass anstelle der in Figur 1 gezeigten Kombination 12 auch eine Ballenpresse 16 und ein davon getrennter Ballenwickler verwendet werden könnte, die mit zugeordneten Zugfahrzeugen über ein Feld bewegt werden. Auch könnten die Kombination 12 oder die Ballenpresse 16 und/oder der Ballenwickler 10 selbstfahrend sein.

Ein in der Ballenpresse 16 erzeugter Ballen 22 wird durch eine bewegliche Einrichtung 24 aus der Ballenpresse 16 in eine Wickelposition im Ballenwickler 10 verbracht. Während des Wickelbetriebs liegt somit ein zu umwickelnder Ballen 22' auf der Einrichtung 24, die einen Riemen 26 umfasst, der um zwei an einem Gestell 66 befestigte Walzen 28 umläuft. Oberhalb der Einrichtung 24 umlaufen zwei sich diametral gegenüber liegende Arme 30 mit zueinander senkrechten, vertikalen und horizontalen Abschnitten den Ballen 22'. Jeder vertikale Abschnitt der Arme 30 haltert einen Folienspender 32. Die mittleren Enden der horizontalen Abschnitte der Arme 30 sind mit einer Antriebsanordnung 34 verbunden, die eingerichtet sind, die Arme 30 um eine mittige, vertikale Achse zu drehen. Die Antriebsanordnung 34 ist durch einen Trägerrahmen 38 mit dem Rahmen 14 verbunden und umfasst einen hydraulischen Motor, der mit dem hydraulischen System des Zugfahrzeugs verbunden ist. Während des Wickelbetriebes treibt die Antriebsanordnung 34 oder ein separater Hydraulikmotor auch die Walzen 28 an, sodass sich der Ballen 22' um seine horizontale Mittelachse dreht, während sich die Arme 30 um den Ballen 22' drehen und Folie von den Folienspendern 32 abgewickelt und um den Ballen 22' gewickelt wird. Folienhalter 36 drücken die Folie während des Starts des Wickelbetriebs gegen den Ballen 22' und schneiden sie nach dem Wickeln ab. Die Geschwindigkeiten der Arme 30 und der Walzen 28 können synchronisiert sein, um eine gewünschte Positionierung der Folie auf dem Ballen 22' zu erreichen.

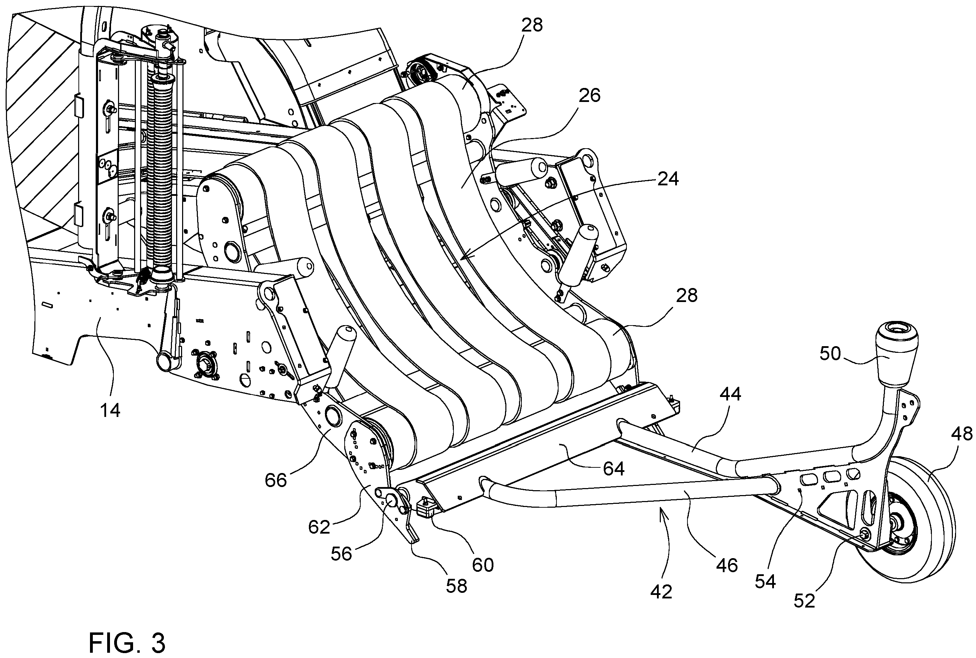

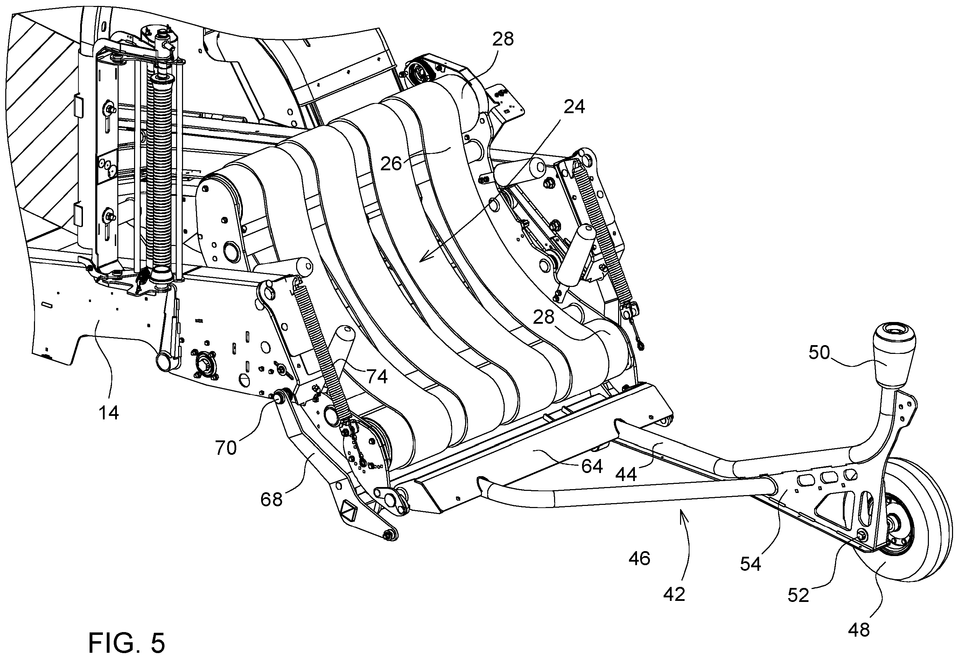

Zum Ablegen des fertiggestellten Ballens 22' auf einem Feld ist das Gestell 66 der Einrichtung 24 mittels eines Aktors 40 um eine sich horizontal und quer zur Vorwärtsrichtung V erstreckende Achse nach hinten und unten schwenkbar, wie in der Figur 3 und 5 gezeigt. Bei einer anderen, nicht gezeigten Ausführungsform ist der Aktor 40 als Motor (der mit der Einrichtung 24 beispielsweise durch Ritze und eine Kette oder einen Riemen verbunden sein kann) ausgeführt, der auch zum Transport der beweglichen Einrichtung 24 aus einer vorderen Position zur Übernahme des Ballens 22 von der Ballenpresse 16 in die in Figur 1, 2 und 4 gezeigte Wickelposition im Ballenwickler 10 dient und auch die Kippbewegung bewerkstelligt. Einzelheiten hierzu sind in der EP 1 186 225 A1 offenbart, deren Offenbarung durch Verweis mit in die vorliegenden Unterlagen aufgenommen werden.

Um zu erreichen, dass der Ballen 22' nicht auf seinem Umfang auf dem Feld zu liegen kommt und bei ungünstigen topografischen Bedingungen wegrollen oder umfallen kann, ist eine Abladekippvorrichtung 42 vorgesehen. Die Abladekippvorrichtung 42 umfasst eine Längsstrebe 44, die bei der dargestellten Ausführungsform als Rohr ausgeführt ist und sich von einer Querstrebe 64 nach hinten erstreckt. Die Längsstrebe 44 umfasst mehrere Abschnitte, die zueinander jeweils Winkel einschließen und insgesamt etwa ein liegendes "L" mit einem abgerundeten Mittelabschnitt bilden.

Die Querstrebe 64 ist ihrerseits an ihren beiden seitlichen Enden durch horizontale, sich quer zur Vorwärtsrichtung V der Kombination 12 erstreckende Achsen 56 drehbar an Abschnitten 62 des Gestells 66 der Einrichtung 24 angelenkt, die sich gabelförmig hinter der rückwärtigen Walze 28 nach hinten erstrecken und die Querstrebe 64 zwischen sich aufnehmen. Eine schräg angeordnete Diagonalstrebe 46 erstreckt sich von der Querstrebe 64 schräg nach hinten und seitlich und ist unterhalb des rückwärtigen Bereichs der Längsstrebe 44 mit einer sich vertikal und Vorwärtsrichtung V erstreckenden Trägerplatte 54 verbunden, die ihrerseits an der Unterseite der Längsstrebe 44 angebracht ist. Die etwa dreieckige Trägerplatte 54 ist zur Gewichtsverminderung gelocht. Sie trägt an ihrem rückwärtigen, unteren Ende eine Achse 52, welche ein Stützelement 48 in Form eines gummibereiften Rades haltert, durch welches sich die Ablagekippvorrichtung 42 dann auf dem Erdboden abstützt, wenn die Einrichtung 24 durch den Aktor 40 nach hinten und unten gekippt ist und der Ballen 22' ausgeworfen wird (s. Figur 3 und 5).

Die Längsstrebe 44 trägt an ihrem rückwärtigen, oberen Ende einen doppelt konischen Körper 50, der vorzugsweise um die Hochachse frei drehbar an der Längsstrebe 44 angebracht ist. Die Längsstrebe 44 ist gegenüber der Längsmittelebene der Kombination 12 seitlich nach rechts versetzt an der Querstrebe 64 angebracht, während die Diagonalstrebe 46 etwa so weit nach rechts vom ihr benachbarten Abschnitt 62 beabstandet ist wie die Längsstrebe 44 vom ihr benachbarten Abschnitt 62.

Wie anhand der Figuren 3 und 5 erkennbar ist, wird ein von der nach hinten und unten abgekippten Einrichtung 24 abrollender Ballen 22' auf der Längsstrebe 44 und der Diagonalstrebe 46 abrollen und durch diese sowie den Körper 50 zur Seite hin abgelenkt, sodass er mit seiner flachen Seite auf dem Feld zum Liegen kommt, wie bereits erwähnt. Die erwähnten Komponenten bilden einzeln oder gemeinsam Umlenkmittel, die konfiguriert sind, einen Rundballen 22, der von der mittels des Aktors 40 schwenkbaren Einrichtung 24 des Wicklers 10, auf welcher der Ballen 22 beim Wickeln aufliegt, hinabrollt, zur Seite hin umzulenken, sodass er mit seiner flachen Stirnseite auf dem Boden zu liegen kommt.

Um auf möglichst wenig aufwändige Weise zu erreichen, dass die Abladekippvorrichtung 42 bei eventuellen Wendevorgängen auf einem Feld sich nicht an Bodenwellen, Furchen oder anderen Hindernissen verhakt und letztlich gegen den Rahmen 14 stößt und selbst beschädigt wird oder den Wickler 10 beschädigt, und zudem bei einer Transportfahrt das Stützelement 48 nicht in Bodeneingriff sein muss, ist vorgesehen, dass der Aktor 40 nicht nur die Einrichtung 24 verstellt, sondern auch die Abladekippvorrichtung 42 anhebt, solange sie nicht benötigt wird. Hierzu ist die Querstrebe 64 mit ihren beiden Enden schwenkbar an den Achsen 56 angelenkt und zudem erstrecken sich die Abschnitte 62 von der Achse 56 noch weiter nach hinten und bilden an ihrem oberen, rückwärtigen Ende einen Anschlag 58, der mit einem zugehörigen Gegenelement 60 an der Unterseite der Querstrebe 64 zusammenwirkt. Der Anschlag 58 und/oder das Gegenelement 60 können aus einem in sich elastischen Material wie Gummi ausgeführt sein.

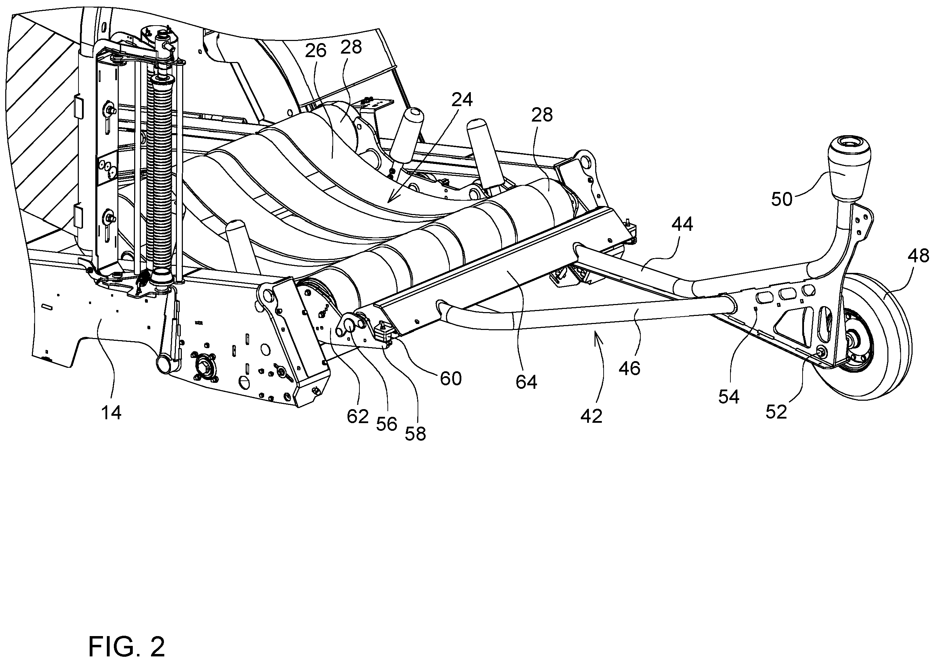

Nach alledem ergibt sich die in den Figuren 1 und 2 einerseits gezeigte horizontale Stellung der Einrichtung 24 und angehobene Stellung der Abladekippvorrichtung 42 beim Wickeln des Ballens 22' und andererseits die geneigte Stellung der Einrichtung 24 und abgesenkte Stellung der Abladekippvorrichtung 42 beim Abladen des Ballens 22'.

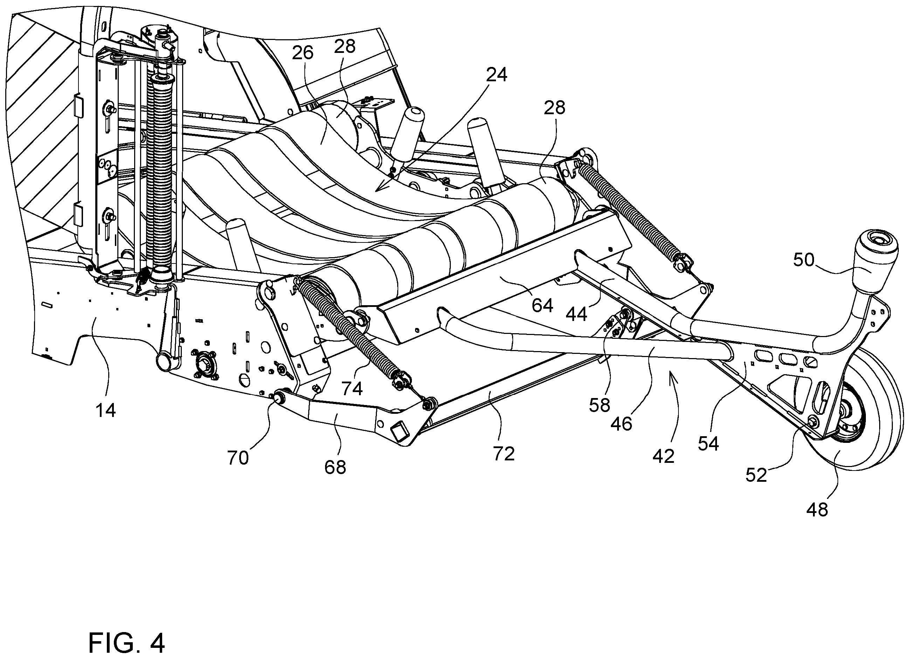

Bei der zweiten Ausführungsform, die in den Figuren 4 und 5 gezeigt ist, sind mit der ersten Ausführungsform übereinstimmende Elemente mit denselben Bezugszeichen versehen. Bei dieser Ausführungsform ist der Anschlag 58, wie in der Figur 4 erkennbar, an einer quer verlaufenden Halterung 72 angebracht, die sich ihrerseits zwischen zwei Schwingen 68 erstreckt. Die Schwingen 68 sind mit ihren vorderen Enden jeweils um quer zur Vorwärtsrichtung V und horizontal verlaufende Achsen 70 am Rahmen 14 der Kombination 12 angelenkt und an ihren hinteren Enden mit der Halterung 72 verbunden. Zudem sind die Schwingen 68 durch Federn 74, die sich von den hinteren Enden der Schwingen 68 nach vorn und oben zum Rahmen 14 hin erstrecken, nach oben vorgespannt.

Bei dieser Ausführungsform wirkt der Anschlag 58 nicht mit der Diagonalstrebe 46, sondern mit der Längsstrebe 44 zusammen, obwohl auch letzteres möglich wäre.

Die Funktionsweise der zweiten Ausführungsform ist anhand der Figur 5 erkennbar: Wenn die Einrichtung 24 durch den Aktor 40 nach hinten und unten abgekippt wird, um den Ballen 22' abzuladen, geraten die Abschnitte 62 des Gestells 66 der Einrichtung 24 von oben her in Anlage mit der quer verlaufenden Halterung 72, die ihrerseits die Schwingen 68 und den Anschlag 58 gegen die Kraft der Federn 74 um die Achsen 70 drehen, sodass letztlich die Abladekippvorrichtung 42 mit ihrem Stützelement 48 in Bodeneingriff gelangt und der Ballen 22' in der oben beschriebenen Weise abgeladen und gekippt wird. Bei dieser Ausführungsform erfolgt ein etwas sanfteres Anheben der Abladekippvorrichtung 42 als bei der ersten Ausführungsform.

Wenn die Abladekippvorrichtung 42 nicht benötigt wird, kann sie von der Kombination 12 demontiert werden, z.B. durch Abbauen der Achsen 56.

Es sei noch angemerkt, dass bei der gezeigten Ausführungsform der Ballen 22' durch den Wickler 10 abgelegt wird. Der Wickler 10 kann auch als einzelne Maschine ausgeführt werden, die unabhängig von der Presse 16 über ein Feld bewegt wird. Man könnte auch eine Presse 16, deren Ballenpressraum auch zum Umwickeln des Ballens 22 dient (s. WO 00/15023 A1), mit einer erfindungsgemäßen Abladekippvorrichtung 42 versehen.

## Patentansprüche

1. Ballenpresse (16) oder Ballenwickler (10) mit einer Abladekippvorrichtung (42) für Rundballen (22), welche um eine horizontale, sich quer zu einer Vorwärtsrichtung (V) erstreckende Achse (56) schwenkbar an der Presse (16) oder dem Wickler (10) für Rundballen (22) anbringbar oder angebracht und von der Presse (16) oder dem Wickler (10) über ein Feld ziehbar und durch ein Stützelement (48) auf dem Boden abstützbar ist und Umlenkmittel umfasst, die konfiguriert sind, einen Rundballen (22'), der von einer mittels eines Aktors (40) schwenkbaren Einrichtung (24) der Presse (16) oder des Wicklers (10), auf welcher der Ballen (22') beim Pressen oder Wickeln aufliegt, hinabrollt, zur Seite hin umzulenken, sodass er mit seiner flachen Stirnseite auf dem Boden zu liegen kommt, und die Abladekippvorrichtung (42) derart mit der schwenkbaren Einrichtung (24) gekoppelt ist, dass das Stützelement (48) während der Erstellung oder des Umwickelns des Ballens (22') außer Bodeneingriff ist und durch die durch den Aktor (40) bewerkstelligte Schwenkbewegung der Einrichtung (24) in Bodeneingriff gerät, **dadurch gekennzeichnet, dass** die um die horizontale, sich quer zur Vorwärtsrichtung erstreckende Achse (56) schwenkbar an der schwenkbaren Einrichtung (24) angelenkte Abladekippvorrichtung (42) mit einem Anschlag (48) zusammenwirkt, der mit der schwenkbaren Einrichtung (24) gekoppelt ist und die Abladekippvorrichtung (42) bei während des Pressens oder Wickelns horizontal orientierter, schwenkbarer Einrichtung (24) anhebt und bei zum Ablegen des Rundballens (22') gekippter Einrichtung (24) außer Kontakt mit der Abladekippvorrichtung (42) gelangt, welche dann durch die Schwerkraft um die Achse (56) verschwenkt, sodass das Stützelement (48) in Bodeneingriff gelangt.

2. Ballenpresse (16) oder Ballenwickler (10) nach Anspruch 1, wobei der Anschlag (58) starr mit der schwenkbaren Einrichtung (24) verbunden ist.

3. Ballenpresse (16) oder Ballenwickler (10) nach Anspruch 1, wobei der Anschlag (58) an einer Schwinge (68) vorgesehen ist, die am Rahmen (14) der Presse (16) oder des Wicklers (10) um eine horizontale, quer zur Vorwärtsrichtung orientierte Achse (70) frei schwenkbar angelenkt und durch eine Feder (74) nach oben vorgespannt ist, wobei die Schwinge (68) durch die Einrichtung (24) um die Achse (70) verschwenkbar ist.

4. Ballenpresse (16) oder Ballenwickler (10) nach einem der Ansprüche 1 bis 3, wobei das Stützelement (48) ein Rad oder eine Kufe umfasst.

## Claims

1. Baler (16) or bale wrapper (10) with an unloading tipping apparatus (42) for round bales (22), which can be attached or is attached to the baler (16) or to the wrapper (10) for round bales (22) so as to be able to pivot about a horizontal pin (56) extending transversely to a forward direction (V) and can be drawn across a field by the baler (16) or the wrapper (10) and can be supported on the ground by a supporting element (48) and comprises deflecting means, which are configured to deflect a round bale (22') to the side such that it comes to rest with its flat end side on the ground, said round bale rolling down from a device (24), which can be pivoted by means of an actuator (40) and on which the bale (22') rests during baling or wrapping, of the baler (16) or of the wrapper (10), and the unloading tipping apparatus (42) is coupled to the pivotable device (24) in such a manner that, while the bale (22') is being created or wrapped, the supporting element (48) ceases to be in contact with the ground and comes into contact with the ground as a result of the pivoting movement of the device (24) effected by the actuator (40), **characterized in that** the unloading tipping apparatus (42), which is articulated to the pivotable device (24) so as to be able to pivot about the horizontal pin (56) extending transversely to the forward direction, interacts with a stop (48), which is coupled to the pivotable device (24) and, when the pivotable device (24) is horizontally oriented during baling or wrapping, lifts the unloading tipping apparatus (42) and, when the device (24) is tipped in order to place the round bale (22'), ceases to be in contact with the unloading tipping apparatus (42), which then pivots about the pin (56) under the effect of gravity so that the supporting element (48) comes into contact with the ground.

2. Baler (16) or bale wrapper (10) according to Claim 1, wherein the stop (58) is rigidly connected to the pivotable device (24).

3. Baler (16) or bale wrapper (10) according to Claim 1, wherein the stop (58) is provided on a link (68) that is articulated to the frame (14) of the baler (16) or of the wrapper (10) so as to be able to freely pivot about a horizontal pin (70) oriented transversely to the forward direction and is upwardly preloaded by a spring (74), wherein the link (68) can be pivoted about the pin (70) by the device (24).

4. Baler (16) or bale wrapper (10) according to one of Claims 1 to 3, wherein the supporting element (48) comprises a wheel or a runner.

## Revendications

1. Presse à balles (16) ou enrubanneuse (10) avec un dispositif de basculement de déchargement (42) pour des balles rondes (22), qui peut être installé ou est installé de manière à pouvoir pivoter autour d'un axe (56) horizontal s'étendant transversalement par rapport à une direction vers l'avant (V) sur la presse (16) ou l'enrubanneuse (10) pour des balles rondes (22) et peut être tiré sur un champ par la presse (16) ou l'enrubanneuse (10) et peut être soutenu sur le sol par un élément d'appui (48) et qui comprend des moyens de déviation, qui sont configurés pour dévier une balle ronde (22'), qui roule depuis un équipement (24), pouvant pivoter au moyen d'un actionneur (40), de la presse (16) ou de l'enrubanneuse (10), sur lequel la balle (22') repose lors du pressage ou de l'enrubannage, vers le côté si bien qu'elle vient se placer sur le sol par son côté frontal plat, et le dispositif de basculement de déchargement (42) est couplé de telle manière à l'équipement (24) pouvant pivoter que l'élément d'appui (48) est hors prise avec le sol pendant la création ou l'enrubannage de la balle (22') et vient en prise avec le sol du fait du déplacement par pivotement de l'équipement (24) effectué grâce à l'actionneur (40), **caractérisée en ce que** le dispositif de basculement de déchargement (42) articulé sur l'équipement (24) pouvant pivoter de manière à pouvoir pivoter autour de l'axe (56) horizontal s'étendant transversalement à la direction vers l'avant coopère avec une butée (48), qui est couplée à l'équipement (24) pouvant pivoter et soulève le dispositif de basculement de déchargement (42) lorsque l'équipement (24) pouvant pivoter est orienté horizontalement pendant le pressage ou l'enrubannage et parvient hors contact avec le dispositif de basculement de déchargement (42) lorsque l'équipement (24) bascule pour déposer la balle ronde (22'), qui pivote alors du fait de la force de gravité autour de l'axe (56) si bien que l'élément d'appui (48) parvient en prise avec le sol.

2. Presse à balles (16) ou enrubanneuse (10) selon la revendication 1, la butée (58) étant reliée de manière rigide à l'équipement (24) pouvant pivoter.

3. Presse à balles (16) ou enrubanneuse (10) selon la revendication 1, la butée (58) étant prévue sur un bras oscillant (68), qui est articulé sur le châssis (14) de la presse (16) ou de l'enrubanneuse (10) de manière à pouvoir pivoter librement autour d'un axe (70) horizontal orienté transversalement à la direction vers l'avant et est précontraint vers le haut par un ressort (74), le bras oscillant (68) pouvant pivoter autour de l'axe (70) grâce à l'équipement (24).

4. Presse à balles (16) ou enrubanneuse (10) selon l'une des revendications 1 à 3, l'élément d'appui (48) comprenant une roue ou un patin.
